# EUROPEAN PATENT APPLICATION

(11) **EP 2 327 874 A2**
(43) Date of publication of application: **01.06.2011**
(21) Application number: 10290152.7
(22) Date of filing: 22.03.2010
(51) Int. Cl.: F03D 1/00

(54) **Wind turbine holding and lifting system and movable operating platform**

(30) Priority: 27.11.2009 CN 200910237985; 10.02.2010 CN 201010112138
(71) Applicant: Sany Electric Co., Ltd., Huilongguan Changping District Beijing 102206 (CN)
(72) Inventor: Wu, Jialiang, Beijing 102206 (CN); Wang, Xinming, Beijing 102206 (CN); Li, Yanlin, Beijing 102206 (CN); Bai, Junlei, Beijing 102206 (CN)
(74) Representative: Quantin, Bruno Marie Henri

(57) **Abstract**

The present invention which relates to the field of offshore wind turbine installation technology, discloses a wind turbine holding and lifting system for a movable operating platform above water. The wind turbine holding and lifting system comprises a first standing column (1), a second standing column (2), a beam lifting device (5), no less than one beam (3) and enclasping means (4) for holding the wind turbine tower (7); the first standing column and the second standing column are juxtaposed, and the opposed faces of the first and second standing columns are provided with guiding grooves for sliding the beams; the enclasping means (4) is arranged on the beam (3), and the two ends of the beam (3) are interfitted within the guiding grooves of the first and second standing columns; the beam lifting device is fixed to the first (1) or second (2) standing column, and the lifting end of the beam lifting device is connected to the beam. The wind turbine holding and lifting system with such a structure can fix the assembled wind turbine (7) in the installation state and the wind turbine can be lifted and lowered. The present invention further discloses a movable operating platform (11) above water.

## Description

### Technical Field

The preset invention relates to the field of offshore wind turbine installation technology, and in particular, it relates to a wind turbine holding and lifting system for a movable operating platform above water. The present invention further relates to a movable operating platform above water.

### Background Art

Offshore wind power generation technology concerns transformation of wind energy into electrical energy by means of one or more wind turbines installed in a wind farm located in an appropriate sea area. A wind turbine generally comprises a tower, an rotor and a nacelle, wherein the nacelle is provided with a generator, a gearbox and a main shaft. The bottom of the tower is installed to the wind turbine foundation of the wind farm, and the rotor and the nacelle are installed at the top of the wind turbine tower. The rotor which is rotatable under the action of wind drives the power generator in the nacelle to generate electrical energy and thereby the transformation of wind energy into electrical energy is achieved.

Generally speaking, each part of the wind turbine is heavy. For example, the total weight of the nacelle of the wind turbine is up to 300 tons. Those relatively large parts such as the gearbox, the generator inside the nacelle each may have a weight up to 60 tons in variety. As a result, it has become an important part for offshore wind farm construction to install the wind turbine at a predetermined sea area.

Up to now, mainly there are two alternative solutions for the installation of a wind turbine in a wind farm.

The first solution is to install the wind turbine by part. Firstly, the wind turbine parts such as tower, a nacelle, blades and so on are carried to the assembly port. Then such parts are carried by a carriage ship to a wind farm in a predetermined offshore sea area. On the wind farm, a movable operating platform above water is served as a basis on which the respective parts of the wind turbine are hoisted on-site to assemble the wind turbine. This solution has the following disadvantages: the movable offshore operating platform has a deep draft so that it cannot operate in an intertidal zone or a shallow sea. In addition, it is impossible to use the leg structure of the present movable offshore operating platform in a muddy coast.

The second solution is to install the wind turbine in one piece. After having been assembled in a port, the wind turbine is integrally conveyed by a carried ship to a wind farm in a predetermined sea area. Then the wind turbine is hoisted by a large floating vessel.

In the second solution, the crane ship is floating with poor stability. When the high and long boom of the crane ship is used to hoist the wind turbine, the swinging of the ship body makes the wind turbine swings more severely. Since it is difficult to align the installation site of the bottom of the tower with that of foundation if the wind turbine keeps swinging, the installation of the wind turbine becomes very difficult. As the stability of the crane ship is crucial when hoisting the entire wind turbine, the wind turbine has to be installed only when the wind is fair and the sea is calm, that is, the operation time is determined by the weather.

In addition, as the large floating vessel ship is not exclusively used for installation of the wind turbine, the using or renting fee is very expressive, adding to the installation cost of the wind turbine. Furthermore, the large floating vessel ship has a deep draft and thus cannot be used to hoist in an intertidal zone or a shallow sea area, so that this solution is restricted by the installation area.

### Summary of the Invention

It is an object of the present invention to provide a wind turbine holding and lifting system which is available for a movable operating platform above water. Firstly, the assembled wind turbine can be integrally fixed in its installation state on a movable operating platform above water. After that, when the movable operating platform above water is moved to the wind turbine foundation position of a wind farm, the wind turbine holding and lifting system is moved to align with the wind turbine foundation so that the installation of the wind turbine can be realized. It is another object of the present invention to provide a movable operating platform above water.

For the first object, the present invention provides a wind turbine holding and lifting system for a movable operating platform above water, characterized in that, it comprises a first standing column, a second standing column, a beam lifting device, no less than one beam and enclasping means for holding a wind turbine tower; the first and second standing columns being juxtaposed, and the opposed faces of the first and second standing columns being provided with guiding grooves for sliding the beam; the enclasping means being arranged on the beam, and the two ends of the beam being interfitted within the guiding grooves of the first and second standing columns; the beam lifting device being fixed to the first standing column or the second standing column and the lifting end of the beam lifting device being connected to the beam.

Preferably, there are no less than two beams, and adjacent beams are fixedly connected by connecting posts.

Preferably, the beam comprises a first beam portion connected to the first standing column and a second beam portion connected to the second standing column, the enclasping means being arranged between the first and second beam portions.

Preferably, the enclasping means comprises a first buckling member, a second buckling member, a third buckling member and a fourth buckling member each having a hinged end and a buckled end, the hinged ends of the first buckling member and the second buckling member being hinged at the inner end of the first beam portion, and the hinged ends of the third buckling member and the fourth buckling member being hinged at the inner end of the second beam portion; a swing mechanisms is attached to the outer side of each of the first buckling member, the second buckling member, the third buckling member and the fourth buckling member, and a support mechanism for holding the wind turbine tower is attached to inner side of each of the first buckling member the second buckling member, the third buckling member and the fourth buckling member; the buckled ends of adjacent buckling members are locked by means of locking members after the buckling members on the first beam portion are engaged with adjacent buckling members on the second beam portion.

Preferably, the swing mechanism allows each of the first buckling member, the second buckling member, the third buckling member and the fourth buckling member to pivot about its hinged ends respectively.

Preferably, the support mechanism is telescopic for adaptation to wind turbine towers of various diameters and holding them.

Preferably, the swing mechanism is a hydraulic cylinder.

Preferably, the support mechanism is a hydraulic cylinder or a hydro-pneumatic spring.

Preferably, the locking member is a locking pin.

Preferably, it comprises two beams with the enclasping means thereon being aligned in the vertical direction.

Preferably, the beam lifting device is a beam hoist fixing to the first standing column or the second standing column, and the wire ropes of the beam hoist are connected to the beam.

Preferably, it further comprises a wind turbine lifting device fixing to the beam, with the lifting end of the wind turbine lifting device connected to the wind turbine tower.

Preferably, the wind turbine lifting device is a wind turbine hoist and the wire ropes of the wind turbine hoist are connected to the wind turbine tower.

Preferably, both ends of the beam are provided with guiding blocks that are interfitted within sliding grooves of the first standing column or the second standing column.

The wind turbine holding and lifting system of the present invention comprises no less than one beam. Driven by the beam lifting device, the beam is movable upwardly and downwardly along the first and second standing columns. Enclasping means are arranged on the beam for holding the wind turbine tower. The wind turbine holding and lifting system of the present invention can be used in a movable operating platform above water. The enclasping means can clamp the wind turbine tower in a horizontal plane, and the beam lifting device can lift or lower the wind turbine together with the beam. Thereby, the assembled wind turbine can be fixed in the installation state and the wind turbine can be lifted or lowered.

When a wind turbine is to be installed, the movable operating platform above water is moved to a wind turbine foundation position of a wind turbine power generation farm; the wind turbine holding and lifting system with the wind turbine fixed thereon is moved to a position corresponding to the wind turbine foundation position; the beams and the wind turbine are lowered together by the beam lifting device such that the installation site of the base of the wind turbine tower is aligned with that of the wind turbine foundation; the base of the wind turbine tower is fixed to the wind turbine foundation by means of a fixing connector; the enclasping means is released and the wind turbine holding and lifting system is moved away from the wind turbine; the movable operating platform above water is moved away from the wind farm; thus, the installation operation of the wind turbine is accomplished.

The wind turbine holding and lifting system with such a structure is capable of fixing the wind turbine on the movable operating platform above water. Upon installation, the wind turbine has a high resistance to wind load. The effect that the swinging of the ship body makes the wind turbine swings more severely is reduced due to the relatively low fixing position of the wind turbine. Since the wind turbine is not apt to swing, and the stability of the wind turbine when lifted or lowered is improved and the swinging of the wind turbine is reduced as the wind turbine is lifted or lowered together with the beams, the installation part at the bottom of the wind turbine tower can be precisely aligned with that of the wind turbine foundation and thus facilitate the installation. In addition, the cost for installation is reduced since it is unnecessary to rent a large crane ship. The movable operating platform above water is not limited to the draft depth and thus can be applied in wind turbine installation at various sea areas.

It is another object of the present invention to provide a movable operating platform above water, which comprises a platform body, no less than one wind turbine holding and lifting system as described above, the wind turbine holding and lifting system being disposed on the upper surface of the platform body; driven by drive means, the wind turbine holding and lifting systems are longitudinally or transversely movable along the platform body.

Preferably, the upper surface of the platform body is provided with longitudinal guide rails extending along the length of the platform body, and bottom surfaces of the first and second standing columns of the wind turbine holding and lifting system are provided with longitudinal rollers to fit with the longitudinal guide rails; driven by drive means, the wind turbine holding and lifting system is movable along the longitudinal rails.

Preferably, the upper surface of the platform body is provided with longitudinal guide rails extending longitudinally along the platform body and guide trays are arranged between the wind turbine holding and lifting system and the platform body, the bottom surfaces of the guide trays being provided with longitudinal rollers fitting with the longitudinal rollers, the upper surfaces of the guide trays being provided with transverse guide rails extending transversely along the platform body, the bottom surfaces of the first and second standing columns of the wind turbine holding and lifting system being provided with transverse rollers fitting with the transverse guide rails; driven by drive means, the first wind turbine holding and lifting system is capable of rolling along the longitudinal or transverse guide rails.

Preferably, the drive means is a hydraulic cylinder.

Preferably, the platform body is provided with no less than one anchor winches.

Preferably, there are four anchor winches being arranged symmetrically at the sides of the platform body.

Preferably, the bottom of the platform body has a flat structure.

Preferably, the sides of the platform body are provided with no less than one bucket legs.

Preferably, it further comprises a platform body lifting means being installed on the platform body, the lifting end of the platform body lifting means being connected to the bucket leg.

Preferably, an end of the platform body is provided with a locating groove for interfitting with the wind turbine foundation, the locating groove being shaped for adaption to the wind turbine foundation.

Preferably, both ends of the platform body are provided with locating grooves.

Preferably, two or more draft depth adjusting means are attached to the sides of the platform body and are symmetrically arranged.

Preferably, the draft depth adjusting means comprise: an airbag for adjusting the waterplane area of the platform body; an inflation system for controlling the inflation and deflation of the airbag; a telescopic mechanism connected to the airbag for controlling the extension and retraction of the airbag; a fixing holder for fixing the telescopic mechanism to the platform body.

Preferably, a manipulating device of the telescopic mechanism is chosen from one of an oil cylinder, an air cylinder or an electrical push rod; the telescopic mechanism comprises a plurality of telescopic units connected in series; the telescopic units are extendable and retractable sections in the manner of a parallelogram four-bar mechanism.

Preferably, the platform body is equipped with a power system for self-navigation, or is not equipped with such a power system and is towed by a tugboat.

The movable operating platform above water is equipped with the aforesaid wind turbine holding and lifting system which, driven by the drive means, is longitudinally or transversely movable along the platform body. The components such as the wind turbine tower, the impeller, the nacelle and so on are assembled into an integral wind turbine at the dock. A hoisting means is used to hoist the wind turbine to an upper surface of the platform body with the bottom of the wind turbine tower facing downwardly and the wind turbine tower exhibiting a vertical state. The movable operating platform above water is transported to an offshore wind farm, with the ends of the movable operating platform above water in alignment with the wind turbine foundation of the wind farm. A wind turbine is lifted to a target height by the wind turbine lifting device. The wind turbine holding and lifting system is moved to the wind turbine installation position on the wind turbine foundation, and the beam lifting device lowers the beams and the wind turbine together to align the installation site at the bottom of the wind turbine with that of the wind turbine foundation. The wind turbine is lowered onto the wind turbine foundation by the wind turbine lifting device and is connected therewith via the installation bolts. The enclasping means is then released, the wind turbine holding and lifting system is removed away from the wind turbine and the movable operating platform above water is removed away from the wind farm. To this end, the installation operation of wind turbines is accomplished.

The movable operating platform above water with such a structure can fix the wind turbine by means of the wind turbine holding and lifting system, with the wind turbine movable longitudinally or transversely along with the wind turbine holding and lifting system. Such a movable offshore operating platform can not only transport wind turbines, but also serve as the working table for installing the wind turbines. During wind turbine installation, the wind turbines are fixed by the wind turbine holding and lifting system and thus are capable of bearing a relatively large wind load. Moreover, since the wind turbine is lifted or lowered together with the beams, the effect that the swinging of the ship body makes the wind turbine swings more severely is reduced due to the relatively low fixing position of the wind turbine. Since the wind turbine is not apt to swing, the installation part at the bottom of the wind turbine tower can be precisely aligned with that of the wind turbine foundation and thus facilitate the installation. In addition, the cost for installation is reduced since it is unnecessary to rent a large crane ship. The movable operating platform above water is not limited to the draft depth and thus can be applied in wind turbine installation at various sea areas.

### Description of the Drawings

Fig. 1 shows schematically the structure of an embodiment of the wind turbine holding and lifting system of the present invention;
Fig. 2 shows schematically the structure of the beam in Fig. 1;
Fig. 3 shows schematically the structure of the enclasping means in an openstate;
Fig. 4 shows schematically the structure of the enclasping means in a closed state;
Fig. 5 shows schematically the structure of an embodiment of a movable operating platform above water of the present invention;
Fig. 6 is a front view showing schematically the structure of the movable operating platform above water in Fig. 5;
Fig. 7 is a top view showing schematically the structure of the movable operating platform above water in Fig. 5;
Fig. 8 is a left view showing schematically the structure of the movable operating platform above water in Fig. 5;
Fig. 9 shows schematically a platform body in Fig. 5;
Fig. 10 shows schematically the structure of a bucket leg in Fig. 5;
Fig. 11 shows schematically the structure of draft depth adjusting means in Fig. 5;

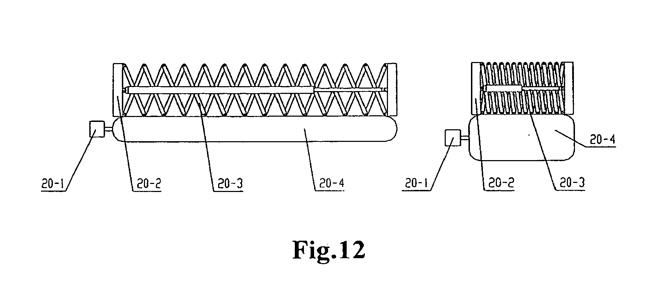

Fig. 12 shows schematically the draft depth adjusting means of Fig. 5 in an extended state and a folded state;

### List of references:

first standing column 1, second standing column 2, beam 3, first beam portion 3-1, second beam portion 3-2, enclasping means 4, first buckling member 4-1, second buckling member 4-2, third buckling member 4-3, fourth buckling member 4-4, swing mechanism 4-5, support mechanism 4-6, locking member 4-7, beam lifting device 5, wind turbine lifting device 6, wind turbine 7, connecting post 8, guiding block 9; platform body 11, first locating groove 11-1, second locating groove 11-2, longitudinal guide rail 11-3, first wind turbine holding and lifting system 12, second wind turbine holding and lifting system 13, anchor winch 14, bucket leg 15, towing ship 16, first wind turbine 17, second wind turbine 18, guide tray 19, transverse guide rail 19-1, draft depth adjusting means 20, inflation system 20-1, fixing holder 20-2, telescopic mechanism 20-3, airbag 20-4.

### Preferred Embodiments for Carrying out the Invention

One key of the present invention is to provide a wind turbine holding and lifting system for a movable operating platform above water. Firstly, the assembled wind turbine can be integrally fixed in its installation state on a movable operating platform above water. After that, when the movable operating platform above water is moved to the wind turbine foundation position of a wind farm, the wind turbine holding and lifting system is moved to align with the wind turbine foundation so that the installation of the wind turbine can be realized. The second key of the present invention is to provide a movable operating platform above water.

The present invention will be described hereinafter by reference to the drawings. However, it should be understood that the following description is merely exemplary and explanatory, without any limitation upon the protection scope of the present invention.

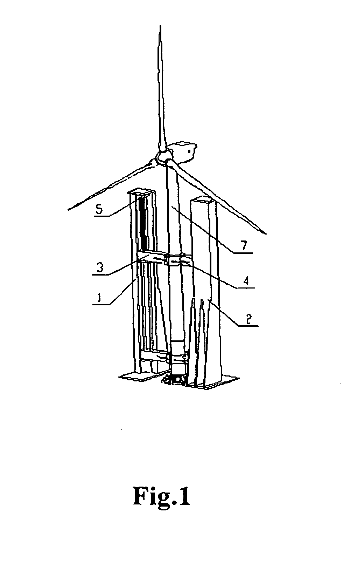

Fig. 1 shows schematically the structure of an embodiment of the wind turbine holding and lifting system of the present invention.

As shown in Fig. 1, the wind turbine lifting and erecting system of the embodiment of the present invention comprises a first standing column 1, a second standing column 2, a beam lifting device 5, no less than one beam 3 and enclasping means 4 for holding a wind turbine tower of a wind turbine 7; the first standing column 1 and the second standing column 2 are juxtaposed, and opposed faces of the first standing column 1 and the second standing column 2 are provided with guiding grooves for sliding the beam; the enclasping means 4 are arranged on the beam 3, and both ends of the beam 3 are interfitted within the guide grooves of the first standing column 1 and the second standing column 2; the beam lifting device 5 is fixed to the first standing column 1 or the second standing column 2 and has its lifting end connected to the beam 3.

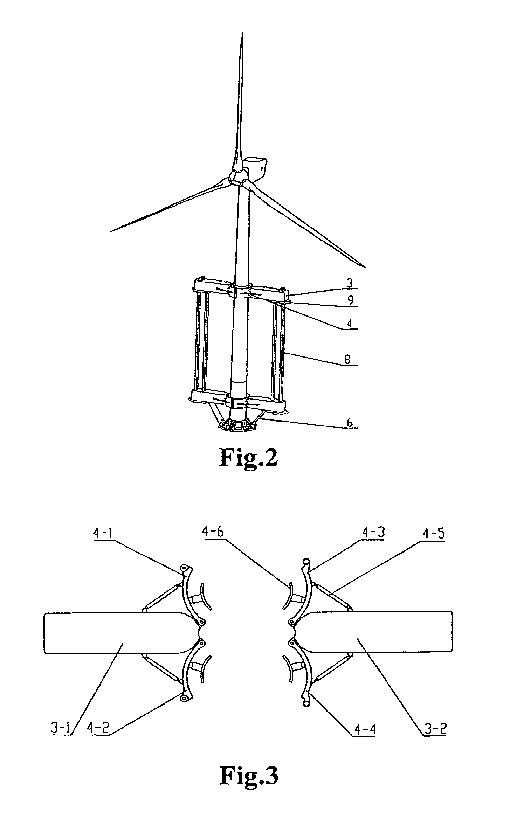

In the embodiment, as shown in Fig. 2, there are two beams 3, each being provided with enclasping means 4, adjacent beams 3 being fixedly connected by connecting posts 8 such that the two beams 3 are integrated as a whole.

In a preferred solution, in order to keep the wind turbine 7 in an installation state, namely, to position the wind turbine tower of the wind turbine 7 in a vertical state, the enclasping means 4 on the respective beams 3 are aligned in the vertical direction.

It shall be understood that the number of the beams 3 may be one or more, adjacent beams 3 being fixedly connected by connecting posts. The number of the beams may be varied according to practical requirements.

Specifically, the beam 3 comprises a first beam portion 3-1 connected to the first standing column 1 and a second beam portion 3-2 connected to the second standing column 2. The enclasping means is installed between the first beam portion 3-1 and the second beam portion 3-2.

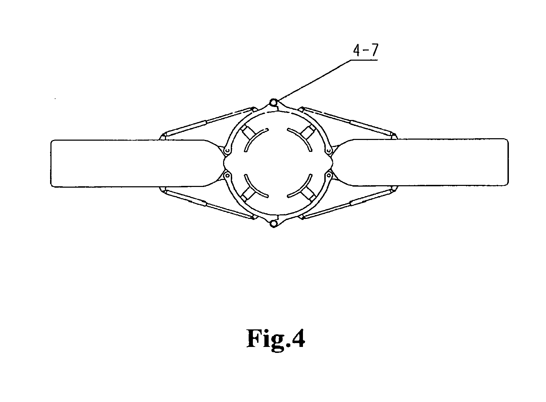

Fig. 3 shows schematically the structure of the enclasping means of Fig. 1 in an opened state, and Fig. 4 shows schematically the structure of the enclasping means of Fig. 1 in a closed state.

As shown in Figs. 3 and 4, the enclasping means 4 comprise a first buckling member 4-1, a second buckling member 4-2, a third buckling member 4-3 and a fourth buckling member 4-4 each with a hinged end and a buckled end. The hinged ends of the first buckling member 4-1 and the second buckling member 4-2 are both hinged to an inner end of the first beam portion 3-1, and the hinged ends of the third buckling member 4-3 and the fourth buckling member 4-4 are hinged to an inner end of the second beam portion 3-2. A swing mechanism 4-5 is arranged on the outer side of each of the first buckling member 4-1, the second buckling member 4-2, the third buckling member 4-3 and the fourth buckling member 4-4. With the swing of the swing mechanism 4-5, the first buckling member 4-1, the second buckling member 4-2, the third buckling member 4-3 and the fourth buckling member 4-4 pivot about their respective pivotal ends so as to be opened or closed. A support mechanism 4-6 is arranged on the inner sides of each of the first buckling member 4-1, the second buckling member 4-2, the third buckling member 4-3 and the fourth buckling member 4-4. These support mechanisms 4-6 are telescopic so that a wind turbine tower of various diameters can be clamped firmly by the enclasping means when the support mechanisms are compressed. A swing mechanism 4-5 drives a buckling member on the first beam portion 3-1 to engage with an adjacent buckling member on the second beam portion 3-2, namely, the first bucking member 4-1 being engaged with the third buckling member 4-3 and the second bucking member 4-1 being engaged with the fourth buckling member 4-3. When the first buckling member 4-1, the second buckling member 4-2, the third buckling member 4-3 and the fourth buckling member 4-4 are engaged with each other, the buckled ends of the first buckling member 4-1 and the third buckling member 4-3 as well as the buckled ends of the second buckling member 4-2 and the fourth buckling member 4-4 are locked respectively by locking members 4-7.

In a specific solution, the swing mechanisms 4-5 can be hydraulic cylinders; the support mechanisms 4-6 can be hydraulic cylinders or hydro-pneumatic springs; and the locking members 4-7 can be locking pins.

The enclasping means 4 of the present invention is used for holding wind turbine tower of the wind turbine 6. The wind turbine tower may either be deadlocked by the enclasping means 4 or not, i.e. the wind turbine tower may rotate when being clamped by the enclasping means 4.

The wind turbine lifting device 5 may be a beam hoist. In particular, the beam hoist may be fixed on the first standing column 1 or the second standing column 2. Wire ropes of the beam hoist are connected to the tower of the wind turbine 7. The beam hoist can lift or lower the beam 3 and the wind turbine 7 fixed thereto by tightening up or releasing the wire ropes.

In a preferred solution, in order to lift or lower the wind turbine 7 along the vertical direction with respect to the beam 3, a wind turbine lifting device 6 fixing to the beam 3 may be further provided, with its lifting end connected to the wind turbine tower of the wind turbine 7.

In a further solution, the wind turbine lifting device 6 may be a wind turbine hoist. The wind turbine hoist is fixed to the beam 3 and the wire ropes thereof is connected to the wind turbine tower of the wind turbine 7.

In a preferred solution, both ends of the beam 3 are provided with guiding blocks 9 which are interfitted within the guiding grooves of the first standing column 1 or the second standing column 2. This structure enables the beam 3 to be lifted or lowered rapidly since the friction during the up and down movement is reduced.

Hereinafter the technical effects of the wind turbine holding and lifting system of the present invention are introduced:

The wind turbine holding and lifting system of the present invention can be used for a movable operating platform above water. The enclasping means 4 are capable of holding the tower of the wind turbine 7 in a horizontal plane, while the beam lifting device 5 is capable of lifting or lowering the wind turbine 7 together with the beam 3. Thereby, an assembled wind turbine can be fixed in the installation state and the wind turbine 7 can be lifted or lowered.

When a wind turbine installation is required, the movable operating platform above water is moved to a wind turbine foundation position of a wind turbine power generation farm; the wind turbine holding and lifting system with a wind turbine 7 fixed thereto is moved to a position corresponding to the wind turbine foundation; the beam 3 and the wind turbine 7 are lowered by the beam lifting device 5, so as to align the installation site of the base of the wind turbine tower with that of the wind turbine foundation and fix the base of the wind turbine tower with the wind turbine foundation by means of fixed connection members; the enclasping means 4 is released, and the wind turbine holding and lifting system is moved away from the wind turbine, and the movable operating platform above water is moved away from the wind farm; thus, the installation operation of the wind turbine is accomplished.

The wind turbine holding and lifting system with such a structure is capable of fixing the wind turbine on the movable operating platform above water. Upon installation, the wind turbine has a high resistance to wind load. The effect that the swinging of the ship body makes the wind turbine swings more severely is reduced due to the relatively low fixing position of the wind turbine. The wind turbine 7 is lifted or lowered together with the beam 3, which improves the stability wind turbine 7 during lifting and lowering. Whereby, the whole installation process is facilitated since the installation site of the bottom of the wind turbine tower can be precisely aligned with that of the wind turbine foundation and thus the installation is facilitated. In addition, the cost for installation can be saved since it is unnecessary to rent a large crane ship. The movable operating platform above water is not limited to the draft depth and thus can be applied in wind turbine installation at various sea areas.

The present invention further provides a movable operating platform above water, which will be described in details hereinafter.

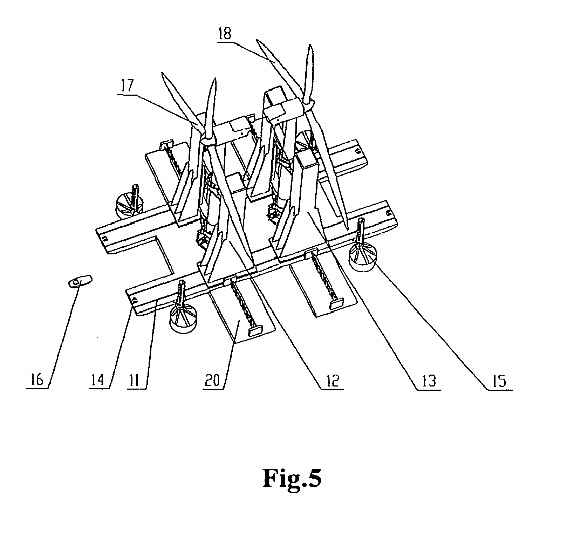

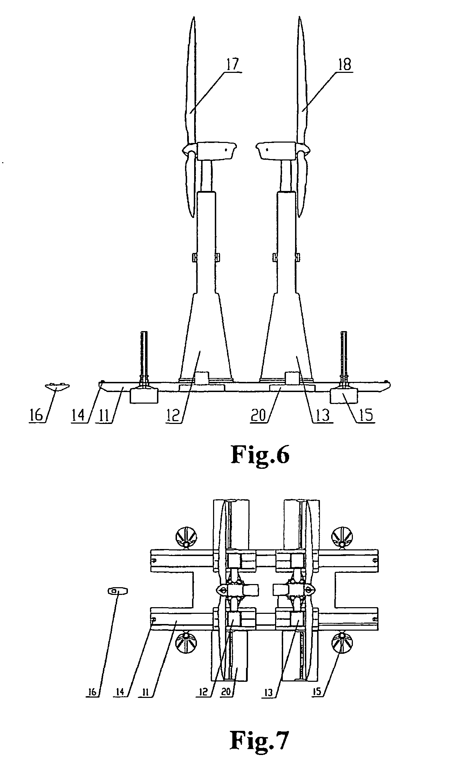

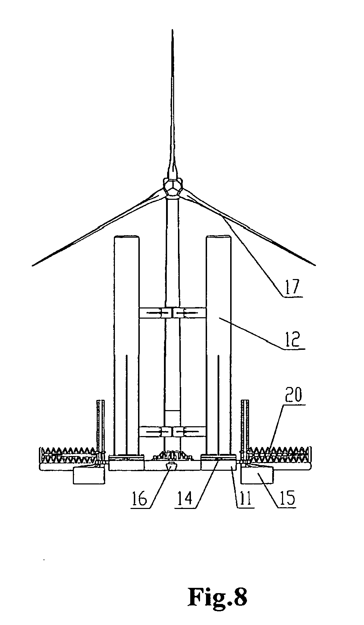

Fig. 5 shows schematically the structure of a specific embodiment of a movable operating platform above water of the present invention; Fig. 6 shows schematically the structure of a front view of the movable operating platform above water; Fig. 7 shows schematically the structure of a top view of the movable operating platform above water of Fig. 5; Fig. 8 shows schematically the structure of a left view of the movable operating platform above water of Fig. 5.

The movable operating platform above water of the embodiment of the present invention comprises a platform body 11, no less than one wind turbine holding and lifting systems disposed on an upper surface of the platform 11. Driven by drive means, the wind turbine holding and lifting system is movable longitudinally or transversely along the platform body 11. Wherein, the wind turbine holding and lifting system is described in the aforesaid embodiment and thus will not be described repeatedly.

In a specific embodiment, the movable operating platform above water of the embodiment the present invention comprises a first wind turbine holding and lifting system 12 and a second wind turbine holding and lifting system 13 provided at each longitudinal end of the platform body 11 respectively. The first wind turbine holding and lifting system 12 and the second wind turbine holding and lifting system 13 are arranged transversely along the platform body 11. A first wind turbine 17 and a second wind turbine 18 are fixed to the first wind turbine holding and lifting system 12 and the second wind turbine holding and lifting system 13 respectively.

For the convenience of description, only the first wind turbine holding and lifting system 12 is described as an example to illustrate the implementation of the present invention.

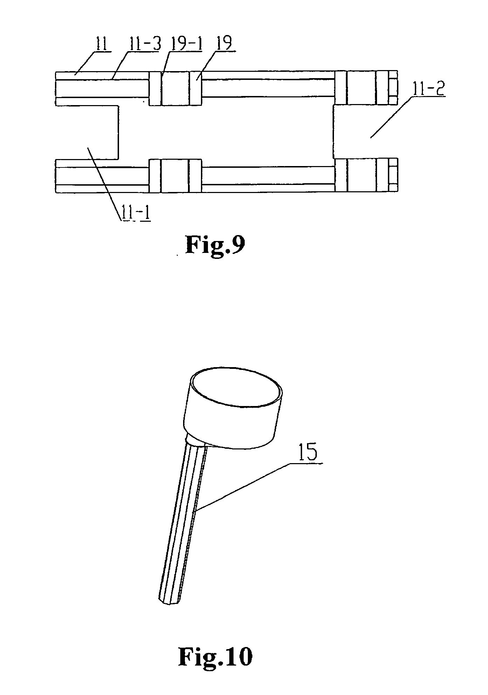

In a preferred solution, in order to move the first wind turbine holding and lifting system 12 longitudinally or transversely along the platform body 11, the upper surface of the platform 11 is provided with longitudinal guide rails 11-3 extending longitudinally along the platform body 11. Guide trays 19 are arranged between the first wind turbine holding and lifting system 12 and the platform body 11. As shown in Fig. 9, the bottom of the guide tray 19 is provided with longitudinal rollers (not shown) fitting with the longitudinal guide rail 11-3. The upper surface of the guide tray 19 is provided with transverse guide rails 19-1. The bottom surfaces of the first and second standing columns of the first wind turbine holding and lifting system 12 are provided with transverse rollers fitting with the transverse guide rails 19-1. Driven by drive means, the first wind turbine holding and lifting system 12 is capable of rolling along the transverse guide rails 19-1 of the guide tray 19, and the guide trays 19 carrying the first wind turbine holding and lifting system 12 are capable of rolling along the longitudinal guide rails 11-3.

The drive means for driving the first wind turbine holding and lifting system 12 to roll along the transverse guide rails 19-1 may be a drive motor.

The drive means for driving the guide trays 19 and the first wind turbine holding and lifting system 12 to roll along the longitudinal guide rails 11-3 may be a drive motor.

In a further solution, the drive means for driving the first wind turbine holding and lifting system 12 to roll along the transverse guide rails 19-1 may be a hydraulic cylinder disposed transversely along the platform body 11. By means of the hydraulic cylinder, the first wind turbine holding and lifting system 12 can be stopped and locked at any transverse position. Thus the accuracy and safety of transversely rolling of the first wind turbine holding and lifting system 12 are improved.

The drive means for rolling the guide trays 19 and the first wind turbine holding and lifting system 12 along the longitudinal guide rails 11-3 can be a hydraulic cylinder longitudinally disposed along the platform body 11. By means of the hydraulic cylinder, the first wind turbine holding and lifting system 12 can be stopped and locked at any random longitudinal position, which improves the accuracy and safety of longitudinal roll of the first wind turbine holding and lifting system 12.

In a preferred solution, the ends of the platform body 11 are provided with locating grooves for positioning with respect to the wind turbine foundation, said locating grooves being shaped to be adapted with that of the wind turbine foundation. In this way, the ends of the platform body 11 can be positioned accurately with respect to the wind turbine foundation of the wind farm and thus the wind turbine holding and lifting system can be moved accurately to the wind turbine installation site of the wind turbine foundation.

In a specific embodiment, a first locating groove 11-1 and a second locating groove 11-2 may be provided at two ends of the platform body 11 respectively. If both the first wind turbine holding and lifting system 12 and the second wind turbine holding and lifting system 13 are arranged on the upper surface of the platform body 11, the wind turbines can be positioned accurately with respect to the wind turbine foundations when being installed respectively by the first wind turbine holding and lifting system 12 and the second wind turbine holding and lifting system 13. If only one wind turbine holding and lifting system is arranged on the upper surface of the platform body 11, the wind turbine may be installed from either end of the platform body 11 by means of the wind turbine holding and lifting system and thus facilitate operating the platform body 11.

If the transverse positioning of the installation site of the bottom of the wind turbine tower bottom with respect to that of the wind turbine foundation can be realized by the locating grooves or any other orientating means, the guide tray 19 between the first wind turbine holding and lifting system 12 and the platform body 11 will not be necessary. The upper surface of the platform body 11 is provided with longitudinal guide rails extending 1 along the length of the platform body 11. The bottom surfaces of the first and second standing column of the first wind turbine holding and lifting system 12 are provided with longitudinal rail grooves to fit with the longitudinal guide rails. Driven by drive means, the first wind turbine holding and lifting system 12 is movable along the longitudinal rails.

In order to make the platform body adaptive to various water depths, in a preferred solution, two or more draft depth adjusting means 20 are attached to the sides of the platform body 11 and are arranged symmetrically.

In a specific embodiment, the draft depth adjusting means 20 comprises an airbag 20-4 for adjusting the waterplane area of the platform body; an inflating system 20-1 for controlling the inflation and deflation of the airbag; a telescopic mechanism 20-3 connected to the airbag for controlling the extension and retraction of the airbag; a fixing holder 20-2 for fixing the telescopic mechanism on the platform body. A manipulating device of the telescopic mechanism 20-3 is chosen from one of an oil cylinder, an air cylinder or an electrical push rod. The telescopic mechanism 20-3 comprises a plurality of telescopic units connected in series. The telescopic units are extendable and retractable sections in the manner of a parallelogram four-bar mechanism.

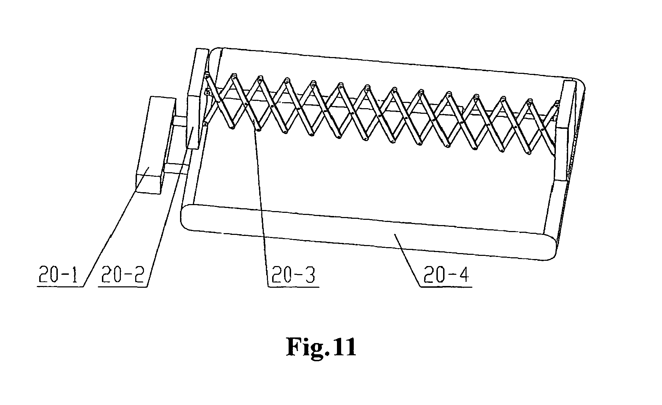

During a normal marine navigation, the telescopic mechanism 20-3 retracts such that the airbag 20-4 is kept in a contracted and folded state (as shown in Fig. 11), and the platform body 11 navigates at a normal shipping draft depth. At this time, since the navigation resistance is reduced, the operating platform above water can navigate at a high speed. When the operating platform above water reaches a shallow zone, the telescopic mechanism 20-3 extends to inflate the airbag 20-4 (as shown in Fig. 11) and the airbag contacts with the water surface and becomes a floating box to increase the buoyancy. At this time, the buoyancy is larger than the weight of the entire operating platform above water so that the platform moves upwardly until the buoyancy equals to the weight of the platform. After having reached the balance, since the waterplane area of the platform body 11 is larger, the draft depth of the platform is correspondingly reduced. Since the inflation of the airbag has a large manipulated rage, the waterplane area of the platform body 11 can be increased significantly. Thereby, the draft depth of the ship can be correspondingly reduced extremely small to satisfy the navigation requirements in an offshore shallow zone.

In a preferred solution, for coarse positioning, the platform body 11 is provided with no less than one anchor winches 14 thereon.

In a more preferred solution, there are four anchor winches 14, which are symmetrically disposed at the sides of the platform body 11. The anchor winches coarsely position the platform body 11 longitudinally and transversely in a heaving manner.

In order to make the movable operating platform above water of the present invention available for an intertidal zone in a muddy coast or a neritic zone, in a preferred solution, the bottom of the platform body 11 has a flat structure. The platform body 11 with a flat bottom structure, which is capable of beaching at a shallow water level, makes it possible to use the movable operating platform in an intertidal zone in a muddy coast or a neritic zone.

In a preferred solution, in order to enable the movable operating platform above water of the present invention to be operated in a sea area of a deep water level or in stormy waves, the lateral sides of the platform body 11 are provided with no less than one bucket legs 15, as shown in Fig. 10. The bucket leg 15 exhibits a reversed barrel structure with its upper end closed and its lower end opened. A plurality of bucket legs 15 are arranged on both sides of the platform body 11. When the water level is deep and the sea waves are strong, the gas is decompressed inside the bucket leg 15 and a negative pressure is formed inside the bucket leg 15 by air and water extraction, whereby, the bucket leg sinks and penetrates into the seabed as a result of the negative pressure, and thus the platform body 11 is fixed by those bucket legs 15; for retracting the bucket legs 15, a positive pressure is generated inside the bucket leg 15 by air inflation and water-filling and thereby the bucket leg 15 smoothly rises.

When the bucket legs are adopted to fix the platform body 11, if the tide difference is relatively large, a platform body lifting means is further arranged to improve the stability of the platform body 11 as well as the resistance to the stormy waves. The platform body lifting means is installed on the platform body 11 and the lifting end of the platform body lifting means is connected to the bucket leg 15. At a large tide difference, the platform body 11 is lifted by the platform lifting means to a certain height above the water surface. Thereby the platform body 11 is protected from instability due to the water level changing ensued from the tide difference and the resistance to the stormy waves of the platform body 11 is increased.

The movable operating platform above water of the present invention may be hauled by a towing ship 16 to the sea area where the wind farm locates, or the movable on-waster operating platform may be provided with a power means to drive the platform to the sea area where the wind farm locates. No limitation upon this is given in the present invention.

The operation principles of the movable operating platform above water are introduced thereinafter:

The components such as the wind turbine tower, the impeller, the nacelle and so on are assembled into an integral wind turbine at the dock. A hoisting means is used to hoist the wind turbine to an upper surface of the platform body 11 with the bottom of the wind turbine tower facing downwardly and the wind turbine tower exhibiting a vertical state. The enclasping means of the wind turbine holding and lifting system firmly clamps the wind turbine tower and the lifting end of the wind turbine lifting device is connected to the wind turbine tower, such that the wind turbine is fixed at a horizontal plane and in the vertical direction by the wind turbine holding and lifting system.

The towing ship 16 conveys the movable operating platform above water to an offshore wind farm. The anchor winches 14 anchors and the locating grooves of the platform body 11 is coarsely positioned with respect to the wind turbine foundation in the manner of heaving. When the water level is shallow, the flat bottom structure of the platform body 11 beaches to assure a stable positioning of the platform body 11. When the water level is deep with stormy waves, the plural bucket legs 15 on both sides of the platform body 11 sink into the seabed. The height of the platform body 11 above the horizontal plane is increased by means of the platform body lifting means such that the platform body 11 can be stably positioned. When the water level is deep weak waves, the platform body 11 can be stabilized merely by heaving.

After the platform body 11 is positioned stably, the wind turbine lifting device lifts the wind turbine to a target height. The wind turbine holding and lifting system is driven to roll to the wind turbine installation position of the wind turbine foundation, the wind turbine holding and lifting system being longitudinally or transversely movable by drive means to precisely position the center of the installation site of the base of the wind turbine tower with respect to that of the wind turbine installation site of the wind turbine foundation. The wind turbine and the enclasping means are relatively rotated under a force to precisely position the bolt holes at the bottom of the wind turbine tower with respect to those of the wind turbine foundation. The wind turbine is lowered onto the wind turbine foundation by the wind turbine lifting device and is connected therewith via the installation bolts. Thus, the wind turbine is installed. The enclasping means and the wind turbine lifting device is then released, the wind turbine holding and lifting system is removed away from the wind turbine and the movable operating platform above water is removed away from the wind farm. To this end, the installation operation of wind turbines is accomplished.

The movable operating platform above water with such a structure can fix the wind turbine by means of the wind turbine holding and lifting system, with the wind turbine movable longitudinally or transversely along with the wind turbine holding and lifting system. Such a movable offshore operating platform can not only transport wind turbines, but also serve as the working table for installing the wind turbines. During wind turbine installation, the wind turbines are fixed by the wind turbine holding and lifting system and thus are capable of bearing a relatively large wind load. Moreover, the effect that the swinging of the ship body makes the wind turbine swings more severely is reduced due to the relatively low fixing position of the wind turbine. Since the wind turbine is not apt to swing, the installation part at the bottom of the wind turbine tower can be precisely aligned with that of the wind turbine foundation and thus facilitate the installation. In addition, the cost for installation is reduced since it is unnecessary to rent a large crane ship. The movable operating platform above water is not limited to the draft depth and thus can be applied in wind turbine installation at various sea areas.

In the above embodiments, the movable operating platform above water is mainly used in an intertidal zone of a muddy cost, a neritic zone and an abyssal zone. However, the present invention does not place any restriction upon the application area. As a matter of fact, the movable operating platform above water may be also applied in an endorheric river, an inland lake and the like.

Only preferred embodiments of the present invention are illustrated above. However, what shall be pointed out is, for a person skilled in the art, it is possible to make various modifications and variations without departing away from the spirit of the present invention, and these modifications and variations shall be regarded as falling into the protection scope of the present invention.

## Claims

1. A wind turbine holding and lifting system for a movable operating platform above water, **characterized in that**, it comprises a first standing column, a second standing column, a beam lifting device, no less than one beam and enclasping means for holding a wind turbine tower; the first and second standing columns being juxtaposed, and the opposed faces of the first and second standing columns being provided with guiding grooves for sliding the beam; the enclasping means being arranged on the beam, and the two ends of the beam being interfitted within the guiding grooves of the first and second standing columns; the beam lifting device being fixed to the first standing column or the second standing column and the lifting end of the beam lifting device being connected to the beam.

2. The wind turbine holding and lifting system according to claim 1, wherein the beam comprises a first beam portion connected to the first standing column and a second beam portion connected to the second standing column, the enclasping means being arranged between the first and second beam portions.

3. The wind turbine holding and lifting system according to claim 2, wherein the enclasping means comprises a first buckling member, a second buckling member, a third buckling member and a fourth buckling member each having a hinged end and a buckled end, the hinged ends of the first buckling member and the second buckling member being hinged at the inner end of the first beam portion, and the hinged ends of the third buckling member and the fourth buckling member being hinged at the inner end of the second beam portion; a swing mechanisms is attached to the outer side of each of the first buckling member, the second buckling member, the third buckling member and the fourth buckling member, and a support mechanism for holding the wind turbine tower is attached to inner side of each of the first buckling member the second buckling member, the third buckling member and the fourth buckling member; the buckled ends of adjacent buckling members are locked by means of locking members after the buckling members on the first beam portion are engaged with adjacent buckling members on the second beam portion.

4. The wind turbine holding and lifting system according to claim 3, wherein the swing mechanism allows each of the first buckling member, the second buckling member, the third buckling member and the fourth buckling member to pivot about its hinged ends respectively.

5. The wind turbine holding and lifting system according to claim 3, wherein the support mechanism is telescopic for adaptation to wind turbine towers of various diameters and holding them.

6. The wind turbine holding and lifting system according to claim 3, wherein the swing mechanism is a hydraulic cylinder.

7. The wind turbine holding and lifting system according to claim 3, wherein the support mechanism is a hydraulic cylinder or a hydro-pneumatic spring.

8. The wind turbine holding and lifting system according to claim 3, wherein the locking member is a locking pin.

9. The wind turbine holding and lifting system according to claim 1, wherein it comprises no less than two beams, the enclasping means on each of the beams being aligned in the vertical direction, and adjacent beams are fixedly connected by connecting posts.

10. The wind turbine holding and lifting system according to claim 1, wherein the beam lifting device is a beam hoist fixing to the beam or to the first or second standing column and the wire ropes of the wind turbine hoist are connected to the beam.

11. The wind turbine holding and lifting system according to claim 1, wherein it further comprises a wind turbine lifting device which is fixed to the beam, a lifting end of the wind turbine lifting device being connected to the wind turbine tower.

12. The wind turbine holding and lifting system according to claim 11, wherein the wind turbine lifting device is a wind turbine hoist, and the wire ropes of the wind turbine hoist are connected to the wind turbine tower.

13. The wind turbine holding and lifting system according to claim 1, wherein both ends of the beam are provided with guiding blocks respectively, the guiding blocks being interfitted within the guiding grooves of the first and second standing columns.

14. A movable operating platform above water, **characterized in that**, it comprises a platform body, no less than one wind turbine holding and lifting system according to any one of claims 1 to 13, the wind turbine holding and lifting system being disposed on the upper surface of the platform body; driven by drive means, the wind turbine holding and lifting system are longitudinally or transversely movable along the platform body.

15. The movable operating platform above water according to claim 14, wherein the upper surfaces of the platform body is provided with longitudinal guide rails extending along the length of the platform body, and bottom surfaces of the first and second standing columns of the wind turbine holding and lifting system are provided with longitudinal rollers to fit with the longitudinal guide rails; driven by drive means, the wind turbine holding and lifting system is capable of rolling along the longitudinal guide rails.

16. The movable operating platform above water according to claim 14, wherein the upper surface of the platform body is provided with longitudinal guide rails extending longitudinally along the platform body and guide trays are arranged between the wind turbine holding and lifting system and the platform body, the bottom surfaces of the guide trays being provided with longitudinal rollers fitting with the longitudinal guide rails, the upper surfaces of the guide trays being provided with transverse guide rails extending transversely along the platform body, the bottom surfaces of the first and second legs of the wind turbine holding and lifting system being provided with transverse rollers fitting with the transverse guide rails; driven by drive means, the wind turbine holding and lifting system is capable of rolling along the longitudinal or transverse guide rails.

17. The movable operating platform above water according to any of claims 14 to 16, wherein the drive means is a) |hydraulic cylinder|.

18. The movable operating platform above water according to any of claims 14 to 16, wherein the platform body is provided with no less than one anchor winches.

19. The movable operating platform above water according to claim 18, wherein there are four anchor winches being arranged symmetrically at the sides of the platform body.

20. The movable operating platform above water according to any of claims 14 to 16, wherein the bottom of the platform body has a flat structure.

21. The movable operating platform above water according to any of claims 14 to 16, wherein the sides of the platform body are provided with no less than one |bucket legs|.

22. The movable operating platform above water according to claim 21, further comprises a platform body lifting means being installed on the platform body, the lifting end of the platform body lifting means being connected to the bucket leg.

23. The movable operating platform above water according to any of claims 14 to 16, wherein an end of the platform body is provided with an locating groove for interfitting with the wind turbine foundation, the locating groove being shaped for adaption to the wind turbine foundation.

24. The movable operating platform above water according to claim 23, wherein both ends of the platform body are provided with locating grooves.

25. The movable operating platform above water according to claim 14, wherein two or more draft depth adjusting means are attached to the sides of the platform body and are symmetrically arranged.

26. The movable operating platform above water according to claim 25, wherein the draft depth adjusting means comprise: an airbag for adjusting the waterplane area of the platform body; an inflation system for controlling the inflation and deflation of the airbag; a telescopic mechanism connected to the airbag for controlling the extension and retraction of the airbag; a fixing holder for fixing the telescopic mechanism to the platform body.

27. The movable operating platform above water according to claim 26, wherein a manipulating device of the telescopic mechanism is chosen from one of an oil cylinder, an air cylinder and an electrical push rod; the telescopic mechanism comprises a plurality of telescopic units connected in series; the telescopic units are extendable and retractable sections in the manner of a parallelogram four-bar mechanism.

28. The movable operating platform above water according to claim 14, wherein the platform body is equipped with a power system for self-navigation, or is not equipped with such a power system and is towed by a tugboat.
